**Europäisches Patentamt**

**European Patent Office**

**Office européen des brevets**

(19)

(11) **EP 0 961 346 A1**

(12) # DEMANDE DE BREVET EUROPEEN

(43) Date de publication:
**01.12.1999 Bulletin 1999/48**

(51) Int Cl.⁶: **H01Q 21/28**, H01Q 9/18, H01Q 7/00

(21) Numéro de dépôt: **99401247.4**

(22) Date de dépôt: **25.05.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **26.05.1998 FR 9806590**

(71) Demandeur: **SOCIETE TECHNIQUE D'APPLICATION ET DE RECHERCHE ELECTRONIQUE STAREC 91410 Dourdan (FR)**

(72) Inventeur: **Gouin, Jean-Pierre 94440 Santeny (FR)**

(74) Mandataire: **Schrimpf, Robert et al Cabinet Regimbeau 26, Avenue Kléber 75116 Paris (FR)**

(54) **Système d'antennes de radiogoniométrie**

(57) Système d'antennes de radiogoniométrie comportant au moins deux antennes cadres et des moyens pour générer un signal de référence, caractérisé en ce que ces moyens comportent une pluralité de dipôles répartis autour du mât et parallèles à celui-ci, ainsi que des moyens pour sommer les signaux en sortie de ces différents dipôles, le signal somme obtenu étant utilisé comme signal de référence.

FIG.1

# Description

La présente invention est relative aux systèmes d'antennes de radiogoniométrie installés sur un mât, tel qu'un mât de navire.

Les systèmes conventionnellement utilisés en radiogoniométrie d'amplitude sont des systèmes à cadres croisés ou encore des systèmes à cadres parallèles répartis autour du mât, ces derniers présentant, par rapport aux systèmes à cadres croisés, l'avantage de permettre d'améliorer considérablement l'erreur de prélèvement, notamment lorsque la direction incidente de l'onde électromagnétique à mesurer coïncide avec l'axe du bâtiment. Les systèmes à cadres croisés ou à cadres parallèles comportent habituellement une antenne de référence omnidirectionnelle qui est une antenne dipôle portée par le mât, qui s'étend selon l'axe dudit mât, dans le prolongement de celui-ci.

La précision de tels systèmes de radiogoniométrie est très fortement affectée dans la gamme de fréquences HF par les réflexions sur les obstacles placés au voisinage des antennes et notamment, dans le cas d'un système utilisé à bord d'un navire, par les réflexions sur la superstructure du bâtiment, les mâts et les antennes d'émission

Un but de l'invention est de proposer un système à antennes de type cadres, dans lequel les moyens qui sont utilisés pour générer le signal de référence sont découplés du mât, de façon que les courants induits sur le mât ne soient pas transmis audit signal de référence, et dans lequel lesdits moyens sont également parfaitement découplés des antennes à cadres, de sorte que le signal de référence est parfaitement indépendant des signaux de mesure.

La solution selon l'invention est un système comportant au moins deux antennes cadres et des moyens pour générer un signal de référence caractérisé en ce que ces moyens comportent une pluralité de dipôles répartis autour du mât et parallèles à celui-ci, ainsi que des moyens pour sommer les signaux en sortie de ces différents dipôles, le signal somme obtenu étant utilisé comme signal de référence.

Ce système est avantageusement complété par les différentes caractéristiques prises seules ou selon toutes leurs combinaisons techniquement possibles :

- les dipôles sont portés par la ou les antennes cadres ;
- ce système comporte plusieurs antennes cadres et les dipôles s'étendent dans les plans desdites antennes cadres ;
- il comporte quatre antennes cadres réparties autour du mât en étant deux à deux parallèles, ainsi que quatre dipôles qui s'étendent parallèlement au mât, selon les axes de symétrie desdites antennes cadres ;
- chacun desdits dipôles est constitué par deux brins qui s'étendent symétriquement de part et d'autre du point milieu du bas du cadre auquel il est associé ;
- les cadres sont des éléments tubulaires refermés sur eux mêmes, dans lesquels s'étend un fil en boucle, lesdits cadres présentant une ouverture à leur partie supérieure ;
- les antennes-cadres et les dipôles sont reliés au mât par l'intermédiaire de bras tubulaires auxquels lesdites antennes-cadres et dipôles sont fixés et des câbles s'étendent à travers lesdits bras et le mât pour relier les sorties desdites antennes à des moyens de traitement ;
- le système est à cadres croisés ;
- chaque cadre porte deux dipôles qui sont diamétralement opposés et s'étendent parallèlement à l'axe du mât en étant fixés sur lesdits cadres sensiblement à mi-hauteur de ceux-ci ;
- ce système d'antennes de radiogoniométrie HF est avantageusement utilisé sur un navire.

D'autres aspects, buts et avantages de l'invention apparaîtront mieux à la lecture de la description suivante d'une forme de réalisation de l'invention, donnée à titre d'exemple et faite en référence aux dessins annexés, sur lesquels :

la figure 1 est une représentation en perspective d'un système d'antennes conforme à un mode de réalisation possible de l'invention ;
la figure 2 est une représentation en vue de côté d'un système d'antennes conforme à un autre mode de réalisation possible de l'invention.

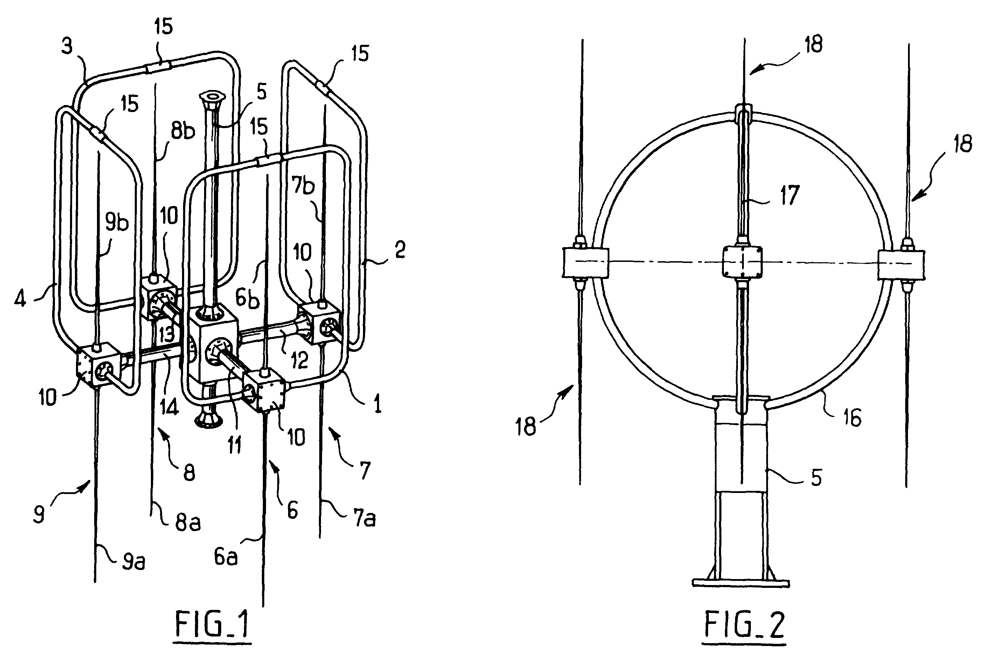

Le système d'antennes qui est représenté sur la figure 1 comporte quatre antennes cadres 1 à 4 identiques réparties uniformément autour d'un mât 5, qui est par exemple le mât d'un navire.

Les plans dans lesquels lesdites antennes 1 à 4 s'étendent sont parallèles audit mât 5, les cadres 1 et 3 étant parallèles l'un à l'autre, les cadres 2 et 4 étant également parallèles l'un à l'autre.

Les deux paires d'antennes que définissent les cadres 1 et 3 et les cadres 2 et 4 sont ainsi en quadrature goniométrique et présentent des diagrammes de rayonnement caractérisés par les relations :

$$E_{NS} = E_0 \sin\theta$$

$$E_{EO} = E_0 \cos\theta$$

où :

- $\theta$ est l'angle d'incidence de l'onde électromagnétique que l'on cherche à détecter, par rapport aux antennes 1 et 3 qui constituent les antennes nord-sud,
- $E_0$ est l'amplitude de ce signal,

- $E_{NS}$ est le champ électrique qui correspond à la somme des champs reçus par les antennes 1 et 3 nord-sud,
- $E_{EO}$ est le champ électrique qui correspond à la somme des champs reçus par les antennes 2 et 4 est-ouest.

La distance entre le cadre 1 (respectivement 2) et le cadre 3 (respectivement 4) est choisie très inférieure aux longueurs d'ondes correspondant à la bande de fréquences que l'on souhaite observer.

De même, les dimensions des cadres 1 à 4 sont choisies petites devant ces longueurs d'ondes.

Dans l'exemple qui est illustré sur la figure 1, les antennes cadres 1 à 4 sont de type rectangulaire. Elles pourraient bien entendu être remplacées par des antennes présentant d'autres formes et notamment par des antennes en boucles circulaires.

Le système comporte également quatre antennes dipôles 6 à 9. Chaque antenne dipôle 6 à 9 s'étend dans le plan de l'une des antennes-cadres 1 à 4, selon une direction qui est parallèle au mât 5 et qui correspond à un axe de symétrie pour l'antenne cadre 1 à 4 dans le plan duquel ladite antenne dipôle se trouve.

Plus particulièrement, chacun desdits dipôles 6 à 9 est constitué par deux brins qui s'étendent symétriquement de part et d'autre du point milieu du bas du cadre 1 à 4 auquel il est associé. Ainsi, chaque dipôle 6 à 9 comporte un brin supérieur qui s'étend à l'intérieur du cadre 1 à 4 dans le plan duquel ledit dipôle est situé et un brin inférieur qui s'étend quant à lui vers le bas, à l'extérieur dudit cadre. Les brins inférieurs ont été référencés de 6a à 9a, les brins supérieurs de 6b à 9b.

Les brins inférieur et supérieur de chaque dipôle 6 à 9 sont reliés entre eux par un symétriseur 0 -180°.

Ce symétriseur est disposé dans un boîtier 10 qui est fixé au milieu du bras inférieur du cadre 1 à 4 auquel le dipôle 6 à 9 relié audit symétriseur est associé. La sortie du symétriseur est reliée à un amplificateur.

Ce boîtier 10 reçoit en outre un amplificateur dont l'entrée est reliée aux extrémités du fil correspondant à la sortie dudit cadre 1 à 4.

Les boîtiers 10 servent également à la fixation des cadres 1 à 4 et des dipôles 6 à 9 sur des bras tubulaires il à 14. Ces bras 11 à 14 s'étendent entre le mât 5 et lesdits boîtiers 10, perpendiculairement audit mât 5.

Le symétriseur et les amplificateurs qui sont reçus dans lesdits boîtiers 10 sont reliés par des câbles qui s'étendent dans les bras 11 à 14. ainsi que dans le mât 5, à des moyens de traitement qui permettent de calculer l'angle $\theta$ en fonction des signaux électriques reçus par les différentes antennes 1 à 4 et 6 à 9.

Ces moyens de traitement comportent notamment un sommateur pour additionner les quatre signaux en sortie des dipôles 6 à 9.

Et ils mettent en oeuvre un traitement du type de ceux classiquement connus par l'Homme du Métier en utilisant les signaux en sortie des antennes cadres 1 à 4 comme signaux de mesure et la somme des signaux en sortie des dipôles 6 à 9 comme signal de référence.

Ce signal somme est en effet équivalent au signal de référence qui est généralement obtenu avec une antenne omnidirectionnelle s'étendant dans le prolongement du mât autour duquel les antennes cadres sont réparties.

On notera qu'avec la structure qui vient d'être décrite, les cadres 1 à 4 et les dipôles 6 à 9 sont parfaitement découplés, étant donné que les cadres 1 à 4 se comportent comme des doublets magnétiques, tandis que les dipôles 6 à 9 se comportent comme des doublets électriques. Par conséquent, les antennes de mesure et l'antenne de référence sont parfaitement indépendantes, ce qui permet d'assurer un bon fonctionnement du goniomètre.

Par ailleurs, étant donné que les différentes antennes 1 à 4 et 6 à 9 sont disposées autour du mât 5, elles sont fortement découplées par rapport à celui-ci.

Pour diminuer encore les risques de couplage, les antennes 1 à 4 sont avantageusement chacune constituées par un tube métallique qui est conformé pour présenter une forme de cadre et dans lequel s'étend un fil en boucle, ce cadre présentant une ouverture au milieu de sa partie supérieure.

Cette ouverture est par exemple une ouverture de 1 à 2 cm.

Avec une telle disposition, la mise à la masse des antennes cadres 1 à 4 se fait par le haut, de sorte que lesdites antennes 1 à 4 sont découplées de l'alimentation des voies de sortie des dipôles 6 à 9.

Dans l'exemple illustré sur la figure 1, les ouvertures de cadres 1 à 4 sont revêtues d'un manchon diélectrique protecteur 15.

A titre d'exemple de dimensionnement, les antennes cadres 1 à 4 peuvent être d'une hauteur de l'ordre de 1m10 et d'une largeur de l'ordre de 60cm. La distance entre deux antennes cadres qui se font face est environ de 1m.

La hauteur des antennes dipôles 6 à 9 est de l'ordre de 1m90.

D'autres dimensionnements sont bien entendu possibles. En particulier, l'envergure du réseau influence très peu la précision de la mesure, dès lors que la distance entre deux antennes cadres diamétralement opposées reste inférieure à 0,2 $\lambda$, où $\lambda$ est la longueur d'onde du signal que l'on cherche à détecter.

Par conséquent, le système peut facilement s'installer sur des mâts présentant un diamètre de 20 cm aussi bien que sur des mâts présentant un diamètre de 80 cm, sans nécessiter d'installations importantes.

D'autres modes de réalisation que celui qui vient d'être décrit sont bien entendu envisageables.

En particulier, les cadres peuvent être du type croisé.

Un mode de réalisation en ce sens a été illustré sur la figure 2.

Dans ce mode de réalisation, deux cadres 16, 17 à boucles circulaires sont entrecroisés perpendiculairement.

Ces deux cadres entrecroisés sont montés sur le mât 5 par des moyens fixés sur lesdits cadres au niveau de leur partie basse, l'axe dudit mât 5 passant par le centre de chacun de ces deux cadres 16, 17.

Chaque cadre 16, 17 porte deux dipôles 18 qui sont diamétralement opposés et qui s'étendent parallèlement à l'axe du mât 5 en étant fixés sur lesdits cadres 16, 17 sensiblement à mi-hauteur de ceux-ci.

## Revendications

1. Système d'antennes de radiogoniométrie comportant au moins deux antennes cadres et des moyens pour générer un signal de référence, caractérisé en ce que ces moyens comportent une pluralité de dipôles répartis autour du mât et parallèles à celui-ci, ainsi que des moyens pour sommer les signaux en sortie de ces différents dipôles, le signal somme obtenu étant utilisé comme signal de référence.

2. Système selon la revendication 1, caractérisé en ce que les dipôles sont portés par les antennes cadres.

3. Système selon l'une des revendications précédentes, caractérisé en ce qu'il comporte plusieurs antennes cadres et en ce que les dipôles s'étendent dans les plans desdites antennes cadres.

4. Système selon l'une des revendications précédentes, caractérisé en ce qu'il comporte quatre antennes cadres réparties autour du mât en étant deux à deux parallèles, ainsi que quatre dipôles qui s'étendent parallèlement au mât, selon les axes de symétrie desdites antennes cadres.

5. Système selon la revendication 4, caractérisé en ce que chacun desdits dipôles est constitué par deux brins qui s'étendent symétriquement de part et d'autre du point milieu du bas du cadre auquel il est associé.

6. Système selon l'une des revendications 4 ou 5, caractérisé en ce que les cadres sont des éléments tubulaires refermés sur eux mêmes, dans lesquels s'étend un fil en boucle, lesdits cadres présentant une ouverture à leur partie supérieure.

7. Système selon l'une des revendications précédentes, caractérisé en ce que les antennes-cadres et les dipôles sont reliés au mât par l'intermédiaire de bras tubulaires auxquels lesdites antennes-cadres et dipôles sont fixés et en ce que des câbles s'étendent à travers lesdits bras et le mât pour relier les sorties desdites antennes à des moyens de traitement.

8. Système selon l'une des revendications précédentes, caractérisé en ce qu'il est à cadres croisés.

9. Système selon la revendication 8, caractérisé en ce que chaque cadre porte deux dipôles qui sont diamétralement opposés et qui s'étendent parallèlement à l'axe du mât en étant fixés sur lesdits cadres sensiblement à mi-hauteur de ceux-ci.

10. Système d'antennes de radiogoniométrie pour un navire, caractérisé en ce qu'il est constitué par un système selon l'une des revendications précédentes.

FIG_1

FIG_2

EP 0 961 346 A1

Office européen
des brevets

**RAPPORT DE RECHERCHE EUROPEENNE**

Numéro de la demande

EP 99 40 1247

| **DOCUMENTS CONSIDERES COMME PERTINENTS** | | | |
|---|---|---|---|
| Catégorie | Citation du document avec indication, en cas de besoin, des parties pertinentes | Revendication concernée | CLASSEMENT DE LA DEMANDE (Int.Cl.6) |
| Y | DE 36 19 028 A (PLATH NAUT ELEKTRON TECH) 10 décembre 1987 (1987-12-10) * le document en entier * | 1-3,7,8, 10 | H01Q21/28 H01Q9/18 H01Q7/00 |
| Y | US 4 916 454 A (BULL JEFFREY F  ET AL) 10 avril 1990 (1990-04-10) * colonne 2, ligne 5-20; figures 1-3 * | 1-3,7,8, 10 | |
| A | PATENT ABSTRACTS OF JAPAN vol. 008, no. 059 (E-232), 17 mars 1984 (1984-03-17) & JP 58 209204 A (KOUDEN SEISAKUSHO:KK), 6 décembre 1983 (1983-12-06) * abrégé * | 1 | |
| A | US 5 521 608 A (BRANDT ROBERT L  ET AL) 28 mai 1996 (1996-05-28) * figure 4 * | 1 | |
| A | US 5 264 862 A (KUMPFBECK RICHARD J) 23 novembre 1993 (1993-11-23) * figure 1 * | 1 | DOMAINES TECHNIQUES RECHERCHES (Int.Cl.6) |
| A | US 4 207 572 A (GREEN TERENCE C  ET AL) 10 juin 1980 (1980-06-10) * figure 2 * | 1 | H01Q G01S |
| A | FR 2 576 152 A (APPLIC RECH ELECTRONIQUE) 18 juillet 1986 (1986-07-18) * figures 5,8A * | | |

Le présent rapport a été établi pour toutes les revendications

| Lieu de la recherche | Date d'achèvement de la recherche | Examinateur |
|---|---|---|
| LA HAYE | 16 août 1999 | Van Dooren, G |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**      EP 99 40 1247

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-08-1999

| Document brevet cité au rapport de recherche | | Date de publication | Membre(s) de la famille de brevet(s) | | Date de publication |
|---|---|---|---|---|---|
| DE 3619028 | A | 10-12-1987 | AUCUN | | |
| US 4916454 | A | 10-04-1990 | AUCUN | | |
| JP 58209204 | A | 06-12-1983 | JP | 1728830 C | 29-01-1993 |
| | | | JP | 4014521 B | 13-03-1992 |
| US 5521608 | A | 28-05-1996 | AUCUN | | |
| US 5264862 | A | 23-11-1993 | AUCUN | | |
| US 4207572 | A | 10-06-1980 | AUCUN | | |
| FR 2576152 | A | 18-07-1986 | AUCUN | | |

EPO FORM P0460

Pour tout renseignement concernant cette annexe : voir Journal Officiel de l'Office européen des brevets, No.12/82